# EUROPEAN PATENT SPECIFICATION

(11) **EP 3 505 332 B1**
(45) Date of publication and mention of the grant of the patent: **04.09.2024**
(21) Application number: 18214813.0
(22) Date of filing: 20.12.2018
(51) Int. Cl.: B29C 70/48, B29C 70/84, B29C 70/86, B29C 70/08, B62D 25/02, B62D 29/04, B29C 45/14, B29L 31/30

(54) **SELF-SUPPORTING COMPOSITE STRUCTURE FOR BODY AND FRAME PARTS OF MOTOR VEHICLES**
SELBSTTRAGENDE VERBUNDSTRUKTUR FÜR KAROSSERIE- UND RAHMENTEILE VON KRAFTFAHRZEUGEN
STRUCTURE COMPOSITE AUTOPORTANTE POUR ÉLÉMENTS DE CARROSSERIE ET DE CHÂSSIS DE VÉHICULES AUTOMOBILES

(30) Priority: 27.12.2017 IT 201700149938
(43) Date of publication of application: 03.07.2019
(73) Proprietor: Ranger Compositi S.r.l., 13851 Castelletto Cervo (BI) (IT)
(72) Inventor: Ali, Enrico Maria, 13851 Castelletto Cervo BI (IT)
(74) Representative: Perani & Partners S.p.A.

(56) References cited:
- EP-A2- 3 173 317
- WO-A2-2016/016662
- DE-A1- 4 120 133
- DE-C1- 4 423 642
- US-A1- 2015 283 756

## Description

The present invention relates to a self-supporting composite structure designed to constitute part of a motor vehicle bodywork and chassis obtained by means of the molding technology called HP-RTM (High Pressure Resin Transfer Molding).

In accordance with this molding technology, it is known to make structural components for the automotive and aerospace industry by injection of a thermosetting resin into a mold in which reinforcing fibers, such as, for example, carbon fibers, glass fibers and their combinations and prefabricated structural elements made of plastic foam materials have been previously arranged.

In accordance with this known technology, the prefabricated structural elements are arranged side by side in the cavity of the mold in order to reproduce the geometric shape of the structure to be made, e.g. a sidewall of the bodywork of a motor vehicle. The injection into the mold of a thermosetting resin, e.g. an epoxy resin, determines the connection of the various structural elements to each other and to the reinforcing fibers, thus creating the composite structure. EP3173317 A2 discloses self-supporting composite structure with reinforcing fibers.

Document DE 4423642 describes a support frame for cars manufactured by connecting structural elements through a preformed junction in direct contact with the structural elements. In particular, such junction keeps the elements spaced in predetermined angulations. In detail, the structural elements and the junction are fixed by a heat-sealing process or by resin injection. In the latter case, the junction and the respective structural elements are inserted in a mould where epoxy resin is cast into. After resin setting, the junction is fixed to the respective structural elements, which finally result spaced from each other through the junction itself.

According to what is known in the art, it has been found that the injected epoxy meets a high resistance to its sliding within the mold among the prefabricated structural elements laid therein and among the reinforcing fibers. Consequently, it does not reach all the various areas of the mold and produces a composite structure that does not provide the desired stiffness and strength.

The object of the present invention is to obtain a reinforced composite structure, which can be made of thermosetting resin in accordance with the HP-RTM technology, which employs working pressures ranging for example from 30 to 150 bars, preferably more than 50 bars, so as to achieve an excellent resin distribution within the geometric shape of the structure and a high degree of rigidity and resistance to the various stresses to which, for example, a part of the bodywork of a motor vehicle may be subjected. This and other objects that will best emerge from the following description are achieved by a self-supporting composite structure according to claim 1.

It shall be noted that the support frame described in document DE 4423642 doesn't have a connection for the structural elements which is formed by the resin injected in the mould, but a preformed separation by the junction.

Advantageously, the extent of the spacing section is between 3 and 10 mm.

According to the invention, each of said prefabricated resin foam structural elements is wrapped in fibers of reinforcing material, particularly carbon fibers.

More advantageously, the composite structure according to the invention comprises layers of reinforcing fibers, preferably carbon fibers, arranged on both sides of said prefabricated resin foam structural elements, which, in turn, are wrapped in reinforcing fibers, preferably carbon fibers.

The invention will now be described in greater detail with reference to the attached drawings, in which:

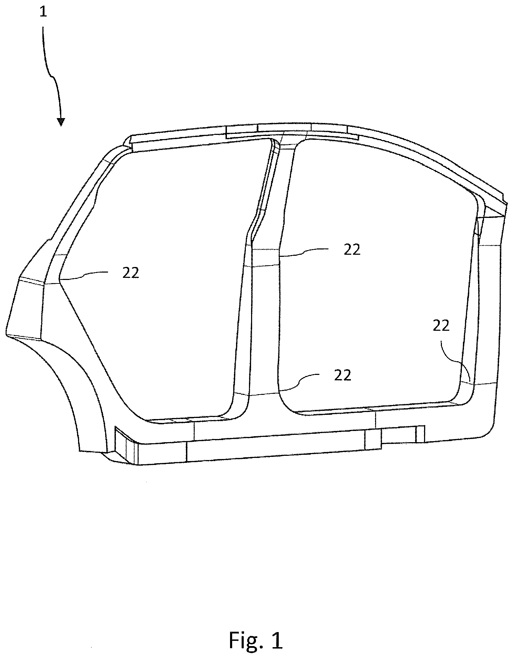

- Figure 1 shows a schematic side view of a composite structure according to the invention, in particular a sidewall of the bodywork of a motor vehicle;

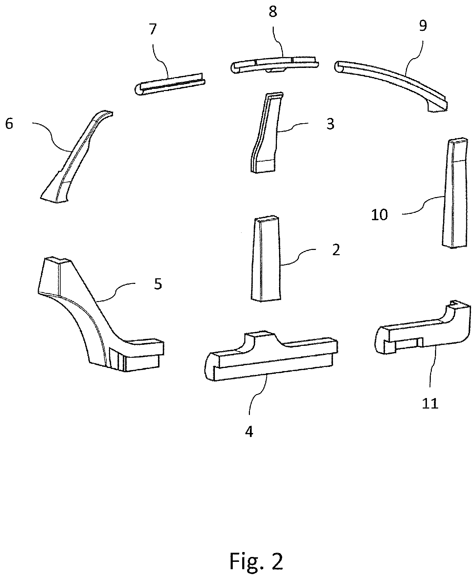

- Figure 2 shows a schematic view of the prefabricated resin foam structural elements arranged according to the overall geometric shape of the composite structure;
- Figure 3 shows the view of a face of the mold for manufacturing the structure according to the invention, whose cavity is occupied by some prefabricated resin foam structural elements belonging to the geometric shape of the composite structure to be manufactured;
- Figure 4 shows the view of the mold face of Figure 3 in which one of the prefabricated elements has been removed from the mold cavity to show the mold cavity;

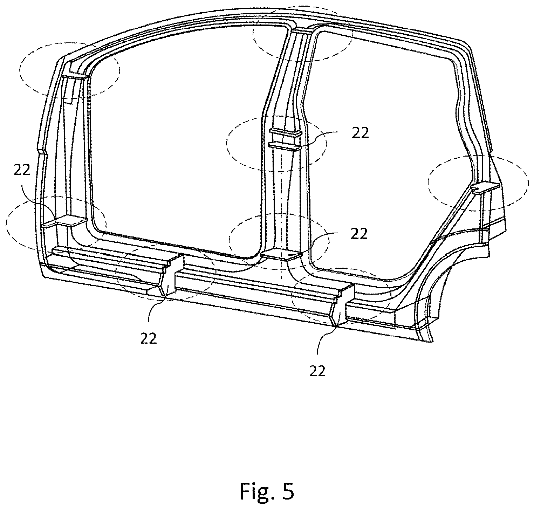

- Figure 5 shows a schematic perspective view of the composite structure resulting after the molding;
- Figure 6 shows a perspective view of a face of the open mold during the deposition of the reinforcing fibers and of the prefabricated structural elements wrapped in reinforcing fibers;
- Figure 7 shows a sectional view of the composite structure according to the invention along the line VII-VII of Figure 5 after the injection;
- Figure 8 shows a schematic perspective view of the cavity of the closed mold with the structural elements arranged in the cavity, with the indication of the point of the injection of the thermosetting resin, of the schematic path followed by the resin inside the mold and of the positions of the valve devices for the outflow of air from the mold cavity during the resin injection.

With reference to the aforesaid figures, the reference number 1 designates as a whole a multi-layered composite structure according to the invention, comprising reinforcing fibers, for example carbon fibers, suitable for constituting e.g. the side portion of the bodywork of a motor vehicle.

This structure is composed of single structural elements 2, 3, 4, 5, 6, 7, 8, 9 10, 11, which are aligned in a mold so as to create the geometric shape of the structure 1 to be manufactured.

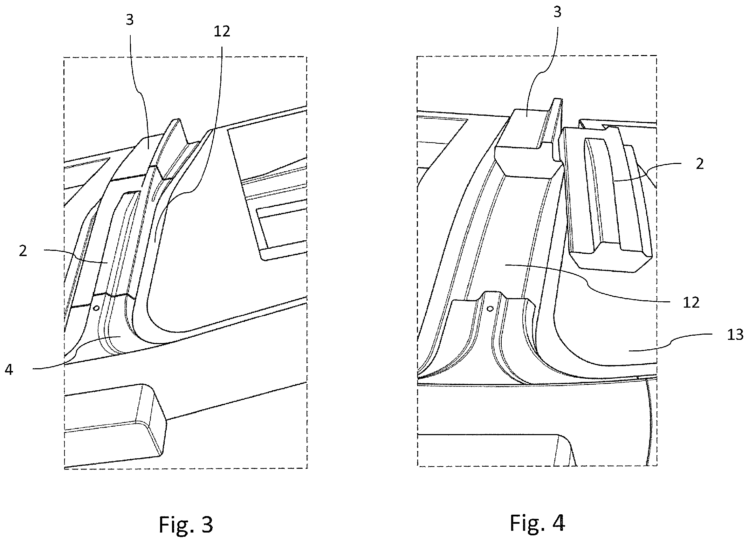

Figure 3 shows the structural elements 2, 3 and 4 arranged in the cavity 12 of a first face 13 of the mold indicated with 14 as a whole.

Figure 4 shows the structural element 2 removed from the cavity 12 of the mold to show the cavity.

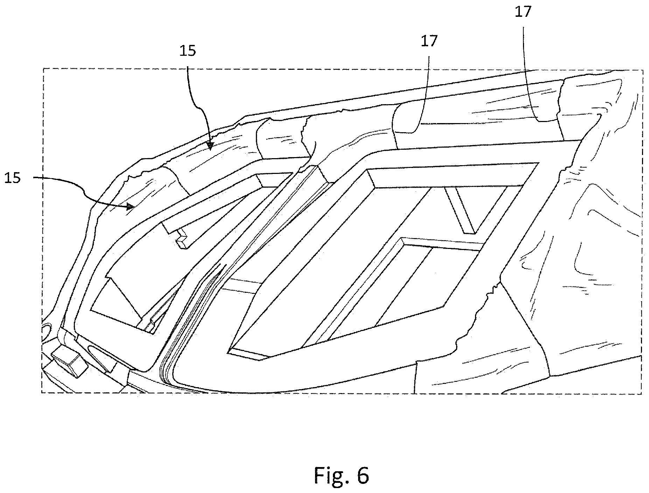

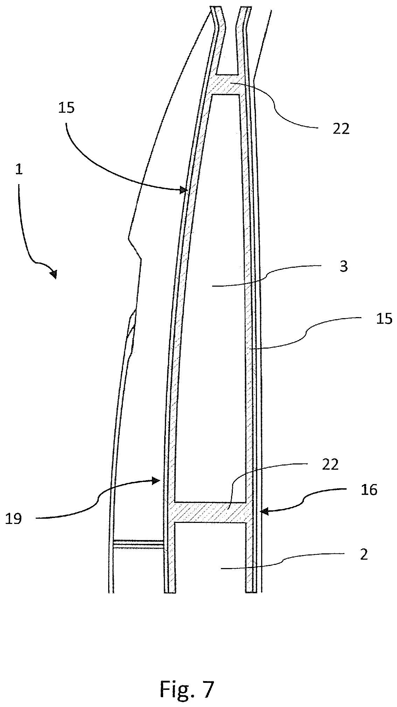

According to the invention, before being arranged in the mold cavity 12, the structural elements 2, 3, 4, ... 11 according to the geometric shape of the composite structure 1 to be manufactured are individually wrapped by a layer 15 of reinforcing fibers, for example carbon fibers, as shown in Figures 6 and 7.

Advantageously, before the positioning of the structural elements 2, 3, 4, ... 11 in the cavity 12 of the mold, it is laid a layer of reinforcing fibers that will form the inner shell 16 of the structure 1 resulting at the end of the manufacturing process as shown in Figure 7.

According to the invention, the structural elements 2, 3, 4, ... 11 are arranged in the cavity 12 of the mold, aligned according to the geometric shape of the composite structure to be manufactured but axially spaced from one another along a predetermined section 17, as shown in Figure 6. The extent of said spacing section 17 can vary, for example, between 5 and 10 mm. Preferably, the spacing section 17 between the structural elements 2, 3, 4, ... 11 is empty before the resin is injected.

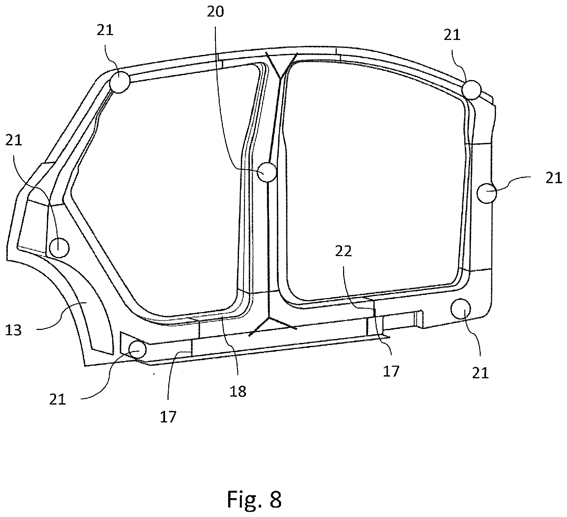

Before closing the mold by applying an outer mold face 18, as schematically shown in Figure 8, in the mold cavity, over the structural elements 2, 3, 4, ... 11 wrapped in the layer 15 of reinforcing fibers, it is laid a further layer of reinforcing fibers that will form the outer shell 19 of the composite structure as shown in Figure 7.

As shown in Figure 8, the injection of the thermosetting resin is preferably carried out in the mold position indicated by 20, from which the resin flows towards the various points of the mold cavity from which the air can be evacuated through a plurality of valve elements 21 distributed in the points of the mold that are farthest from the injection point 20.

According to the invention, the resin spreads between the structural elements 2, 3, 4, ... 11 wrapped by the layer 15 of reinforcing fibers and the further layer of reinforcing fibers.

More preferably, the injected resin causes the inner shell 16 and the outer shell 19 to be fixed after the setting.

Further preferably, a resin layer with variable thickness is arranged between layer 15 of reinforcing fibers and the further later of fibers, thereby ensuring cohesion between the inner shell 16 and the outer shell 19.

The sliding of the resin within the mold is facilitated by the presence of the axial spacing sections 17 between the structural elements 2, 3, 4, ... 11 in which, consequently, transversal joints 22 are formed as a result of resin setting. In other terms, the sections 17 improve the resin sliding as they are empty while the resin is injected, and they provide a stronger structural reinforcement by enabling the formation of the transversal joints 22. In fact, during the resin injection the sections 17 let the resin itself slide easier within the mold. The injected resin gradually fills the sections 17 by spreading into the empty spaces within the mold until the complete filling thereof. Finally, the transversal joints 22 are defined by the resin setting between the structural elements 2, 3, 4, ... 11.

Therefore, each transversal joint 22 formed by the setting of injected resin connects two consecutive structural elements 2, 3, 4, ... 11 and extends along the respective spacing section 17.

Therefore, the resulting composite structure not only has an even distribution of the resin but also has an increased resistance due to the presence of the transversal joints 22.

According to the invention, the resin injected between the layer 15 of fibers and the further layer of fibers is directly connected with the transversal joints 22, thereby defining an inner resin frame which is formed in one piece between the structural elements 2, 3, 4, ... 11 and the outer shell 19.

More preferably, the inner resin frame connects the structural elements 2, 3, 4, ... 11 to each other and to the respective layer 14 of fibers and further layers of fibers. Materials, size and geometric shape of the structure manufactured according to the invention may vary according to the requirements without departing from the scope of the invention as described above and claimed below.

## Claims

1. A self-supporting composite structure with reinforcing fibers designed to constitute part of a motor vehicle bodywork and chassis, obtained by the molding process referred to as High-Pressure Resin Transfer Molding, HP-RTM, comprising prefabricated structural elements (2, 3, 4 ... 11) made of resin foam, aligned with each other according to the geometrical configuration of the composite structure, each of said prefabricated structural elements (2, 3, 4 ... 11) being wrapped with a layer (15) of fibers of reinforcing material, said prefabricated structural elements (2, 3, 4, ... 11) made of resin foam are longitudinally spaced from one another through a predetermined section (17) which is empty before the resin injection, said section (17) being occupied by corresponding transversal joints (22) formed as a result of the setting of the resin injected during the molding process **characterized in that it** comprises
- an outer shell (19) of the self-supporting composite structure, obtainable by laying a further layer of reinforcing fibers in a mold cavity before closing the mold, and
- a one piece inner resin frame between the structural elements (2, 3, 4, ... 11) and the outer shell (19), obtainable by injecting the resin during the molding process between the layer (15) wrapping the prefabricated structural elements (2, 3, 4 ... 11) and the further layer of fibers forming the outer shell (19), the resin frame being directly connected with the transversal joints (22).

2. The structure according to claim 1, wherein the dimensional extension of the spacing section (17) between the structural elements (2, 3, 4, ... 11) is between 3 and 10 mm.

3. The structure according to any one of claims 1 or 2, **characterized in that** it comprises a first layer of reinforcing fibers arranged on one side of the structural elements (2, 3, 4, ... 11) made of resin foam.

4. The structure according to any one of claims 1 to 2, **characterized in that** it comprises layers of reinforcing fibers arranged on both sides of the structural elements (2, 3, 4, ... 11) made of resin foam.

5. The structure according to any one or more of the claims from 1 to 4, wherein said reinforcing fibers are carbon fibers.

6. The structure according to any one or more of the claims from 1 to 4, wherein said reinforcing fibers are glass fibers

7. The structure according to any one or more of claims 1 to 4, wherein said reinforcing fibers consist of a combination of carbon fibers and glass fibers.

## Patentansprüche

1. Selbsttragende Verbundstruktur mit Verstärkungsfasern, die dazu ausgelegt ist, einen Teil der Karosserie und des Fahrgestells eines Kraftfahrzeuges zu bilden, und die durch das als Hochdruckharzinjektionsverfahren HP-RTM bezeichnete Injektionsverfahren erhalten wird und die aus Harzschaum hergestellte vorgefertigte Strukturelemente (2, 3, 4 ... 11) umfasst, die gemäß der geometrischen Konfiguration der Verbundstruktur zueinander ausgerichtet sind, wobei jedes der vorgefertigten Strukturelemente (2, 3, 4 ... 11) mit einer Schicht (15) aus Fasern aus Verstärkungsmaterial umwickelt ist, wobei die aus Harzschaum hergestellten vorgefertigten Strukturelemente (2, 3, 4, ... 11) in Längsrichtung durch einen vorgegebenen Abschnitt (17), der vor der Harzinjektion leer ist, voneinander beabstandet sind, wobei der Abschnitt (17) durch entsprechende Querverbindungen (22) belegt wird, die infolge des Einstellens des während des Injektionsverfahren injizierten Harzes gebildet werden **dadurch gekennzeichnet, dass sie Folgendes umfasst**
- eine äußere Schale (19) der selbsttragenden Verbundstruktur, die durch Einlegen einer weiteren Schicht von Verstärkungsfasern in einen Formhohlraum vor dem Schließen der Form erhalten werden kann, und
- einem einteiligen inneren Harzrahmen zwischen den Strukturelementen (2, 3, 4, ... 11) und wobei die äußere Schale (19), die durch Injektion des Harzes während des Injektionsverfahrens zwischen der Schicht (15), die die vorgefertigten Strukturelemente (2, 3, 4 ... 11) umwickelt und der weiteren Faserschicht, die die äußere Schale (19) bildet, erhalten werden kann, wobei der Harzrahmen direkt mit den Querverbindungen (22) verbunden ist.

2. Struktur nach Anspruch 1, wobei die Größeausdehnung des Abstandsabschnitts (17) zwischen den Strukturelementen (2, 3, 4, ... 11) zwischen 3 und 10 mm liegt.

3. Struktur nach einem der Ansprüche 1 oder 2, **dadurch gekennzeichnet, dass** sie eine erste Schicht aus Verstärkungsfasern umfasst, die auf einer Seite der aus Harzschaum hergestellten Strukturelemente (2, 3, 4, ... 11) angeordnet ist.

4. Struktur nach einem der Ansprüche 1 bis 2, **dadurch gekennzeichnet, dass** sie Schichten von Verstärkungsfasern umfasst, die auf beiden Seiten der aus Harzschaum hergestellten Strukturelemente (2, 3, 4, ... 11) angeordnet ist.

5. Struktur nach einem oder mehreren der Ansprüche 1 bis 4, wobei die Verstärkungsfasern Kohlenstofffasern sind.

6. Struktur nach einem oder mehreren der Ansprüche 1 bis 4, wobei die Verstärkungsfasern Glasfasern sind

7. Struktur nach einem oder mehreren der Ansprüche 1 bis 4, wobei die Verstärkungsfasern aus einer Kombination von Kohlenstofffasern und Glasfasern bestehen.

## Revendications

1. Structure composite autoportante avec fibres de renforcement destinée à faire partie de la carrosserie et du châssis d'un véhicule automobile, obtenue par le procédé de moulage appelé moulage par transfert de résine à haute pression (HP-RTM, High-Pressure Resin Transfer Molding), comprenant des éléments structurels préfabriqués (2, 3, 4 ... 11) réalisés en mousse de résine, alignés les uns aux autres selon la configuration géométrique de la structure composite, chacun desdits éléments structurels préfabriqués (2, 3, 4 ... 11) étant enveloppé d'une couche (15) de fibres de matériau de renforcement, lesdits éléments structurels préfabriqués (2, 3, 4, ... 11) réalisés en mousse de résine sont espacés longitudinalement les uns des autres à travers une section prédéterminée (17) qui est vide avant l'injection de résine, ladite section (17) étant occupée par des joints transversaux correspondants (22) formés à la suite de la prise de la résine injectée au cours du processus de moulage **caractérisée en ce qu'elle** comprend
- une enveloppe extérieure (19) de la structure composite autoportante, pouvant être obtenue par la pose d'une couche supplémentaire de fibres de renforcement dans une cavité de moule avant la fermeture du moule, et
- un cadre intérieur en résine d'une seule pièce entre les éléments structurels (2, 3, 4, ... 11) et l'enveloppe extérieure (19), pouvant être obtenu en injectant la résine pendant le processus de moulage entre la couche (15) enveloppant les éléments structurels préfabriqués (2, 3, 4 ... 11) et l'autre couche de fibres formant l'enveloppe extérieure (19), le cadre en résine étant directement relié aux joints transversaux (22).

2. Structure selon la revendication 1, dans laquelle l'extension dimensionnelle de la section d'espacement (17) entre les éléments structurels (2, 3, 4, ... 11) est comprise entre 3 et 10 mm.

3. Structure selon l'une quelconque des revendications 1 ou 2, **caractérisée en ce qu'**elle comprend une première couche de fibres de renforcement disposée sur un côté des éléments structurels (2, 3, 4, ... 11) réalisés en mousse de résine.

4. Structure selon l'une quelconque des revendications 1 à 2, **caractérisée en ce qu'**elle comprend des couches de fibres de renforcement disposées de part et d'autre des éléments structurels (2, 3, 4, ... 11) réalisés en mousse de résine.

5. Structure selon l'une quelconque ou plusieurs des revendications 1 à 4, dans laquelle les fibres de renforcement sont des fibres de carbone.

6. Structure selon l'une quelconque ou plusieurs des revendications 1 à 4, dans laquelle les fibres de renforcement sont des fibres de verre.

7. Structure selon l'une quelconque ou plusieurs des revendications 1 à 4, dans laquelle les fibres de renforcement sont constituées d'une combinaison de fibres de carbone et de fibres de verre.
